Europäisches Patentamt

(19) European Patent Office

Office européen des brevets

(11) Publication number: **0 035 567**
**B1**

(12) **EUROPEAN PATENT SPECIFICATION**

(45) Date of publication of patent specification: **11.01.84**

(21) Application number: **79901160.6**

(22) Date of filing: **10.09.79**

(86) International application number:
**PCT/JP79/00241**

(87) International publication number:
**WO 81/00777 19.03.81 Gazette 81/7**

(51) Int. Cl.³: **G 06 K 21/02**

(54) **AUTOMATIC SELECTOR FOR FILE CASES.**

(43) Date of publication of application:
**16.09.81 Bulletin 81/37**

(45) Publication of the grant of the patent:
**11.01.84 Bulletin 84/2**

(84) Designated Contracting States:
**CH DE FR NL SE**

(56) References cited:
**JP - A - 47 042 636**
**JP - A - 49 030 099**
**JP - A - 49 070 545**
**JP - A - 50 065 300**
**JP - A - 51 113 799**
**JP - A - 55 000 904**
**JP - B - 43 028 390**
**JP - B - 49 036 036**
**JP - B - 53 008 516**

(73) Proprietor: **MATSUDA, Takayuki**
**56-7, Denenchofu-Honcho Otaku**
**Tokyo 145 (JP)**
(73) Proprietor: **MATSUDA, Chiaki**
**56-7, Denenchofu-Honcho Otaku**
**Tokyo 145 (JP)**

(72) Inventor: **MATSUDA, Takayuki**
**56-7, Denenchofu-Honcho Otaku**
**Tokyo 145 (JP)**
Inventor: **MATSUDA, Chiaki**
**56-7, Denenchofu-Honcho Otaku**
**Tokyo 145 (JP)**

(74) Representative: **Wright, Peter David John et al,**
**R.G.C. Jenkins & Co. 12-15, Fetter Lane**
**London EC4A 1PL (GB)**

Courier Press, Leamington Spa, England.

Automatic selector for file cases

Field of the technology

The present invention relates to an apparatus for automatically selecting only designated file cases from a number of thin file cases which are randomly held in a single or a number of racks, said file cases containing materials such as clinical charts, x-ray film for each patient in a hospital or various papers, drawings, films, cards etc. which are classified for each case, goods, client, area, time etc. in public offices and private offices.

Background of the technology

"System A"

In this prior system, designated file cases are exposed in a slanted state toward the front (i.e. towards an operator facing the selector—the same reference is applied to the words "rear" and "left and right"). This system is a combination of the structures described in Japanese Examined Patent Publications Nos. 36036/1974, 27400/1975, 8516/1978 and 6878/1978 and Japanese Examined Utility Model Publication No. 15358/1978.

"System B"

This system (described in Japanese Unexamined Patent Publication No. 113799/1976 is an improvement of system A in which the designated cases are ejected horizontally toward the front.

The inventions discloses in the publications mentioned above were made by the inventors of the present invention.

"System C"

In this system, designated file cases are drawn out using an electromagnet or a permanent magnet. No publication has officially been found disclosing this system but the technique is used somewhere in Japan.

A further system using a spiral rotor is described in JP—A—50—65300.

System A has the advantages of a simple structure and reliable operation since gravity is effectively utilized, while having the disadvantages that it is not easy to grip and withdraw the exposed portion of a designated file case with the fingers since the file case is inclined and the exposed portion is very limited and a projection formed in the lower side of the file case enters into a recess which is produced by the lowering of code bars, and that it is impossible to carry out the next file case selecting operation before the exposed designated case is removed.

System B, which is designated to overcome the disadvantages of system A, also has disadvantages in that a device for accelerating lowering of the designated file cases is provided; a large amount of energy is temporarily required in use (to generate a sudden increase in the rotational torque of a motor) since both the front and rear end portions of all the file cases must be simultaneously lifted up in a series of operations; and parts of the code bars which are relatively weak must support the whole weight of all the file cases for a long time when the selector apparatus is not in use (before the initiation of a selecting operation) thereby rendering the support for the file cases unstable so that there is a risk of faulty operation. This system has the further disadvantage that undesignated cases adjacent to the designated cases tend to be drawn out with the designated cases.

System C is a poor practical utility, since the attractive force of the magnet is too small to ensure the exposure of the designated cases. Accordingly, this technique is not compared with the present invention.

Description of the invention

In order to overcome the disadvantages of the conventional techniques described above, the following features are employed in the invention of the present application (referred to as the present invention below):

1. A spiral rotating means (referred to as a spiral rotor below) is used as means for accelerating the designated cases during lowering to accurately separate the designated file cases from other file cases.

2. The energy required for lifting up all the file cases (i.e. the rotational torque of a motor) is reduced to about a half by separately (sequentially) raising the front and the rear lift bars (designated by numerals [10] and [8] below).

3. A specially provided bar (referred to as a special bar and designated by the reference numeral [12] below) is utilized, which normally supports the rear end portions of all the file cases (before the operation of each member in the selector begins); which keeps all the cases in a stable condition in association with the front lift bar (10) supporting the front end portion of all the file cases; and which descends sufficiently after the initiation of the operation of the spiral rotor (1) so as not to prevent the functioning of other main members in the selector and which ascends, when said other members complete their series of operations and return to their original positions, so as to support the rear end portions, of all the file cases again.

4. In order to provide the above-described features, the rotational angle of a driving shaft (13) is determined corresponding to the movement of each said main member, and the shapes of various cams, rollers, gears etc. fixed to the driving shaft and the arrangement of these elements are improved and adjusted to reduce any sudden change of load on the motor.

5. A separation angle bar (9) is so designed as to assure the separation of designated cases from other cases and the limit the forward movement of all the file cases except the designated cases when the designated cases are ejected.

According to the invention, there is provided an automatic selector for file cases comprising a rack (4) for holding randomly a large number of file cases each of which has a number of projections corresponding to a code number at its lower portion and a rear lower edge projection for maintaining separation of at least one designated file case (2) from the other file cases (2'), a controller (6) for transmitting electric signals corresponding to the code number for the designated file case (2) by operating a push button (6a) or a read out card (7), an electrical system provided at the rack, the electrical system including a series of solenoids and a motor which are actuated by the electric signals, a number of code bars (3) arranged in parallel and below the file cases (2), (2') held in the rack so as to face the projections formed at the lower portions of the file cases, a separation angle bar (9) which can enter into a space between the rear lower edge projections of the file cases (2), (2') generated, in operation, by separating the designated file case (2) downwardly from the undesignated file cases (2') and which thereafter maintains the separated condition, the designated file case (2) being arranged to fall on lowering respective code bars (3) facing the projections at the lower portion of the designated file case by actuation of the electrical system while the undesignated file cases (2') do not fall because some of the projections formed at the lower portions of the undesignated file cases are supported by the code bars (3), a rear lift bar (8) and a front lift bar (10) which are co-operative to lift the front and rear ends of all the file cases (2), (2') in a separated condition, a push-off angle bar (11) capable of turning to push the rear lower edge of the designated file case (2) positioned below the undesignated file cases (2') in a condition when the projections at the lower portions of all the file case (2), (2') lifted up by the front and rear bars (8), (10) are separated from the upper surface of all the code bars (3), a vertically movable front supporter (5) arranged to be in its lowered position when the angle bar (11) turns whereby the designated file case (2) is pushed smoothly so that the front edge portion is put onto the surface of the front supporter (5) and a single driving shaft (13) operable by the electrical system to cause the other parts to return to their original positions during a 360° revolution of the driving shaft while keeping the front edge portion of the designated file case on the front supporter, characterised in that:

[a] a spiral rotor (1) driven from said shaft (13) is provided so that the front edge portions of all the file cases (2), (2') held in the rack (4) are sequentially lifted up and dropped by the twisted blade (1') of the rotor such that the designated file (2) is displaced downwardly, by overcoming the friction with the adjacent file cases (2') due to inertia, while the other cases (2') remain on the code bars (3) thereby separating the designated file case (2) from the other file cases (2');

[b] the front and rear lift bars (8), (10) are separately actuated without overlapping of the actuation timing to lift up all the file cases (2), (2') after the designated file case (2) is separated from the other file cases (2') thereby to reduce the load on the motor to about a half;

[c] the separation angle bar (9) is spaced from the rear edge projections of all the file cases (2), (2') and the rear lift bar (8) is positioned in a lowered state prior to actuation of the selector (and when the selector is not in use for a time) in order to reduce the revolutional angle of the driving shaft required for performing the operations defined in the features [a] and [b] as well as the other requisite operations to a revolution angle of 360°, and there is additionally provided a single special bar (12) to provide stable support for the file cases in the rack by sharing the load of all the file cases in the rack in association with the front lift bar (10) and thereby avoid applying an excessive weight of the file cases (2), (2') to parts of the code bars (3), having insufficient strength to support the file cases at all times;

[d] the shapes and arrangements of various cams, gear wheels (13'), rollers (13'') etc., fitted to the driving shaft (13) are adapted for performing the operation of each part of the selector as well as the operations defined in the features [a] to [c];

[e] the separation angle bar (9) is provided at its upper surface with a shoulder arranged to mesh with a recess formed at the lower portion of the rear lower edge projection of each of the undesignated file cases (2') to prevent the undesignated file cases (2') from being ejected, due to friction, with the designated file case (2) when it is pushed out whereby all the undesignated file cases (2') are left in the rack at predetermined positions after ejection of the designated file case.

With these features, the automatic selector of the present invention overcomes the disadvantages of the conventional techniques and operates better. Patent applications concerning a similar concept have been filed in Japanese Patent Office (Patent Application No. 68362/1978), U.S. Patent and Trademark Office (Serial No. 872,117 which was published in February 1979 as document US—A—4190164) and U.K. Patent Office (Application No. 2826/78 which was published in June 1980 as document GB—A—156 9960). These applications were not published prior to the filing date of the present application.

Brief description of the drawings

The invention is described further, by way of example with reference to the accompanying drawings, in which:—

Figure 1 is a schematic view showing the present invention;

Figure 2 is a partially removed plan view of an arrangement of a portion of the selector;

Figure 3 is a plan view of a spiral rotor (a side view and a sectional view of a part of the rotor are added);

Figure 4 is a side view of a driving shaft (13) and an arrangement of parts fitted to the shaft; and

Figures 5 to 7 are sectional views showing a series of steps in the operation of the main parts of the selector.

Preferred embodiment of the invention

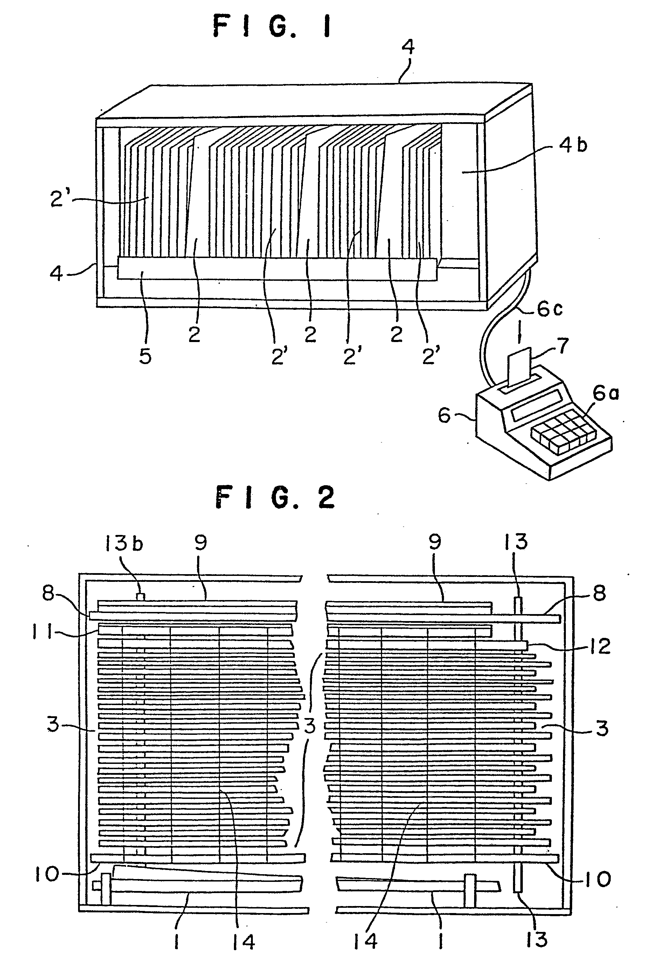

In the description concerning to the preferred embodiment, the concept of the function of the present invention will be described with reference to Figure 1. The code number for the designated file case is converted to an electrical signal by operating a push button (6a) of a controller (6) or inserting a read-out card (7) into the controller so that the electrical signal is fed to an electrical system located at the corner (inside the portion (4b)) of a selector. Various means inside the selector are operated by the electrical system whereby the designated file cases (2) are sequentially or simultaneously (for example, three file cases in Figure 1) drawn out from other aligned file cases (2') and onto a front supporter (5). Thus, the designated file cases will be easily taken out.

The electrical system comprises a series of solenoids which lower code bars (3) having the code numbers for the designated file cases and a motor for rotating a driving shaft (13) 360°, as main components. A detailed description of the electrical system is omitted.

Figure 2 shows an arrangement of important elements held in the selector wherein the reference numeral (1) designates a spiral rotor and (3) designates aligned code bars. A front supporter (5), not shown, covers the spiral rotor (1). The reference numeral (8) designates a rear lift bar, (9) designates a separation angle bar, (10) designates a front lift bar, (11) designates a push-off angle bar, (12) designates a special bar (a specially provided bar), (13) designates a driving shaft, 13b designates an auxiliary driving shaft and (14) designate partition plates which are positioned with their lower ends adjacent to the upper surfaces of the aligned code bars and are vertically held to form a rack divided into several small spaces having an appropriate width.

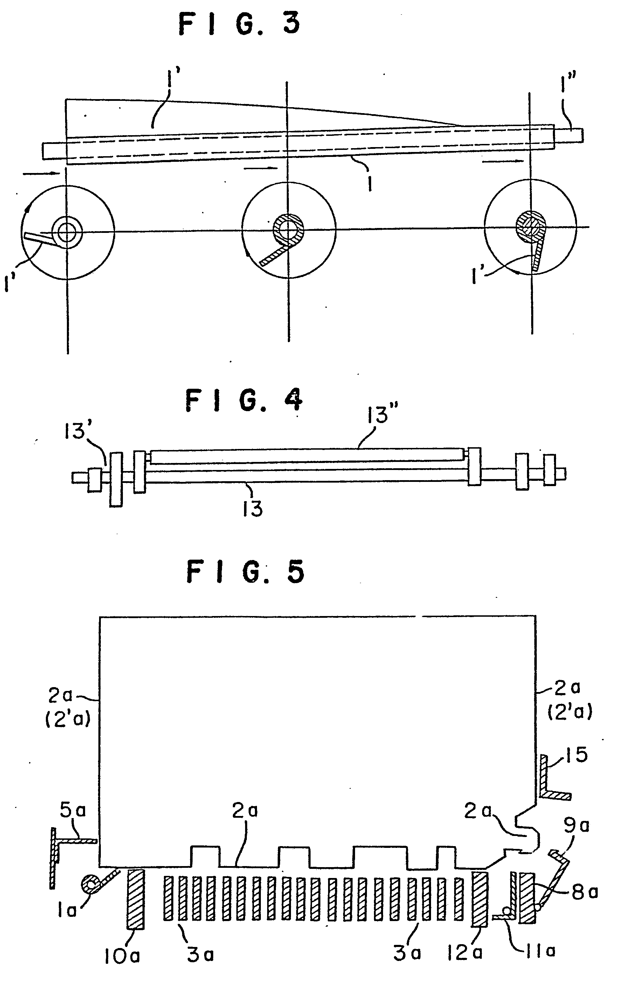

As shown in Figure 4, the driving shaft (13) comprises a gear wheel (13') for transmitting a rotating force to spiral rotor shaft (1'') and the auxiliary driving shaft (13b), an elongated roller (13'') for lifting the lowered code bars (3) and cams (without reference numeral) having various shapes which operates said members (8), (9), (10), (11), (12) so as to suitably operate important members during the rotation of 360°.

Figure 3 shows the structure of the spiral rotor (1) which performs the most important function of the apparatus of the present invention. The spiral rotor (1) comprises the shaft (1'') effecting rotation by the same angle as that of the driving shaft (13) imparting the rotating force and a slightly spiral blade (1') fixed to the driving shaft so that the front edges of all file cases held in the rack (2), (2') are sequentially lifted up by the edge of the blade (1') rotating in the arrow direction. Only one blade (1') is attached to the shaft (1'') in Figures 2 and 3. However, two or three blades (1') may be attached to the shaft to operate them simultaneously for the following reason. The operation and effect of the spiral rotor is greatly affected by the twist angle of the blade. In accordance with the result of experiments, it is desirable to provide an angle of 90° for a blade having a length of 500 mm in a normal condition (a file case including up to about 30 sheets of ordinary papers of A4 size). Accordingly, when the width of the rack is larger or greatly larger than 500 mm, it is desirable to provide blades having a twist angle as mentioned before at two or three positions on the shaft (1''). The width of the blade (the radius of rotation of the blade edge portion) is normally so determined as to lift up the front ends of the file cases (2), (2') about 15 mm.

The entire function of the apparatus of the present invention will be described with reference to Figures 5 to 7 wherein the symbols such as a, b, c for important elements designate the position in the steps of a→b→c for the important elements.

Figure 5 shows the position of the important elements in the selector of the present invention before the selecting operation starts (i.e. in the time of no use of the selector). All the code bars (3) are in the highest position (3a). The upper surface of the front lift bar (10) is in a position slightly higher (such as 2—3 mm) than that of the highest position (3a) for the code bars so as to hold the front edges of all the file cases (2a), (2'a) and the special bar (12a) is in the highest position (the upper surface of the bar (12a) is in a position 2—3 mm higher than the highest position (3a) of the code bars so as to hold the rear end portion of the file cases. The front supporter (5a) is in the highest position to limit the forward movement of all the file cases which are prevented from moving backwards by a stopper (15) fixed at the rear portion of the rack structure. Thus, all the file cases are maintained in a stable condition. The rear lift bar (8a) together with the separation angle bar (9a) and the push-off angle bar (11a) which are pivotally held by the rear lift bar are in the lowest position and the separation angle bar (9a) is slightly turned outwards, while the longer side of the push-off angle bar (11a) is

held upright so as not to prevent the designated file cases (2a) from descending. The blade of the spiral rotor (1a) is ready for lifting up the front end portion of the file cases (2), (2′).

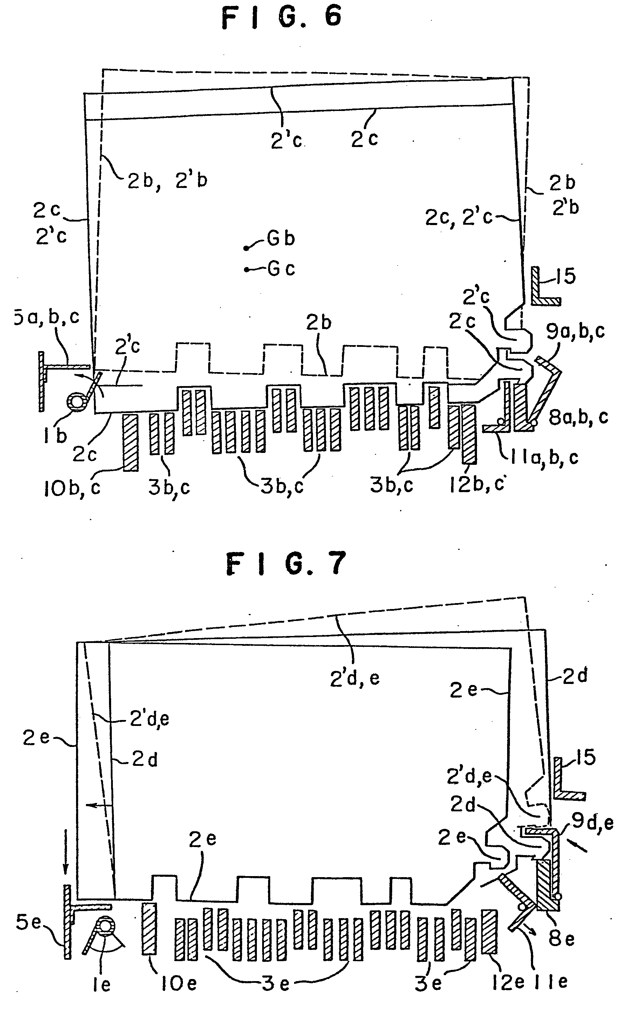

When the controller (6) is operated to output the code number signal for the designated file cases (see Figure 6), the code bars corresponding to the code number descend to the position (3b) and then the driving shaft (13) is actuated to turn by about 50° whereby the front lift bar descends to the position (10b) and the special bar descends to the position (12b) (the lowest position) so as not to prevent the designated file cases (2) from descending. The blade of the spiral rotor lifts up all the file cases from the position (1b) to the position (2b), (2′b) as shown by the dotted line and the driving shaft (13) (the spiral rotor (1)) is rotated to release the file cases in the position (2b), (2′b) by the blade (1′) so that the designated file cases descend to the position (2c) and the other file cases are held in the position (2′c); thus the position (2c) is vertically spaced from the position (2′c) so as to produce a space between the rear and lower projections of the file cases located at the positions (2c) and (2′c). The function of the spiral rotor when the file cases are moved from the position (2b), (2′b) to the position (2c), (2′c) will be described. In the position (2b), (2′b) in which only the front end portion of the file cases (2), (2′) are lifted up, the gravity center of the file cases (2), (2′) is also raised from Ga to Gb. In this state, when the blade of the spiral rotor is disengaged from the file cases to release them from the position (2b), (2′b), gravity acts on Gb, causing the falling of the entire file cases with the rear end in the position (2b), 2′b). However, file cases other than the designated file cases are stopped in the position (2c) by the supporting of the projections in the lower side of the file cases by the upper surface of the code bars (3b) in the raised position, whereas the designated file cases continue to fall down by overcoming the friction with the adjacent file cases stopped in the position (2′c) due to the inertia of falling since the code bars corresponding to the projection of the lower side of the designated file cases are already descended and are finally stopped in the position (2c) because the projections of the lower side are supported by the upper surface of the descended code bars. When the file cases are not tightly packed in the rack resulting in only a slight friction between the designated file cases and the adjacent file cases, the designated file cases sometimes fall to the position (2c) without the functioning of the spiral rotor. In this state, the same result can be obtained by actuating the spiral blade.

As the driving shaft (13) continues the rotation, the separation angle bar (9) enters into the space between the positions (2c) and (2′c) and this state is maintained (Figure 6). In Figure 7, following the entrance movement of the separation angle bar (9), the front lift bar starts to ascend and reaches the highest position (10c). Next, the rear lift bar (8) also starts to ascend and approaches the highest position (8e). At this moment, the push-off angle bar (11) rotates in the arrow direction because of the pulling force of a spring (not shown) to take the position (11e). When the push-off angle bar is moved to such a position, the upper side of the bar strongly pushes the rear lower cut portions of the designated file cases (2d) to eject them to the position (2e). In this case, the spiral blade (1′) faces completely downwards to lower the front supporter in the lowest position (5e) so as not to prevent the file cases from being ejected from the position (2e). The other, non-designated, file cases are held in the position (2′e) and the rear lower projection of the cases are supported by the upper side of the angle bar (9) while the cut portions in the lower surface of the projections of the file cases in the position (2′e) are engaged with the stepped portions formed in the upper surface edge of the angle bar. Accordingly, when the designated file cases are ejected to the position (2e), the adjacent cases located in the position (2′d) are not drawn out from the position (2′e) by the friction.

The various elements are returned to the original position as shown in Figure 5 until the driving shaft (13) stops after it finishes the rotation of 360° so as to safely perform the next selecting operation for designated file cases.

In the operation of each important element, when certain file cases are held in the rack with an inclination greater than a degree such as about 15°, an operational trouble may occur. In order to prevent such a trouble and to satisfy the requirement of partitioning spaces for receiving the file cases etc., partition plates (14) are used to provide small spaces as shown in Figure 2.

It is necessary to attach a metallic plate to the bottom and the inside of the front side portion of the file cases so as to slightly increase the weight of the file cases and so as to shift the gravity center toward the front end of the file cases so that the functioning of the spiral rotor is assured, as well as to increase the strength and durability of the file cases (Japanese Examined Utility Model Publication No. 15358/1978).

Industrial applicability

The apparatus of the present invention is greatly effective for transacting business in public offices and private offices, especially, the handling of clinical charts and X-ray films in the medical field.

**Claims**

1. An automatic selector for file cases comprising a rack (4) for holding randomly a large number of file cases each of which has a number of projections corresponding to a code number at its lower portion and a rear lower edge projection for maintaining separation of at least one designated file case (2) from the other file cases (2'), a controller (6) for transmitting electric signals corresponding to the code number for the designated file case (2) by operating a push button (6a) or a read out card (7), an electrical system provided at the rack, the electrical system including a series of solenoids and a motor which are actuated by the electric signals, a number of code bars (3) arranged in parallel and below the file cases (2), (2') held in the rack so as to face the projections formed at the lower portions of the file cases, a separation angle bar (9) which can enter into a space between the rear lower edge projections of the file cases (2), (2') generated, in operation, by separating the designated file case (2) downwardly from the undesignated file cases (2') and which thereafter maintains the separated condition, the designated file case (2) being arranged to fall on lowering respective code bars (3) facing the projections at the lower portion of the designated file case by actuation of the electrical system while the undesignated file cases (2') do not fall because some of the projections formed at the lower portions of the undesignated file cases are supported by the code bars (3), a rear lift bar (8) and a front lift bar (10) which are co-operative to lift the front and rear ends of all the file cases (2), (2') in a separated condition, a push-off angle bar (11) capable of turning to push the rear lower edge of the designated file case (2) positioned below the undesignated file cases (2') in a condition when the projections at the lower portions of all the file case (2), (2') lifted up by the front and rear bars (8), (10) are separated from the upper surface of all the code bars (3), a vertically movable front supporter (5) arranged to be in its lowered position when the angle bar (11) turns whereby the designated file case (2) is pushed smoothly so that the front edge portion is put onto the surface of the front supporter (5) and a single driving shaft (13) operable by the electrical system to cause the other parts to return to their original positions during a 360° revolution of the driving shaft while keeping the front edge portion of the designated file case on the front supporter, characterised in that:

[a] a spiral rotor (1) driven from said shaft (13) is provided so that the front edge portions of all the file cases (2), (2') held in the rack (4) are sequentially lifted up and dropped by the twisted blade (1') of the rotor such that the designated file (2) is displaced downwardly by overcoming the friction with the adjacent file cases (2') due to inertia, while the other cases (2') remain on the code bars (3) thereby separating the designated file case (2) from the other file cases (2');

[b] the front and rear lift bars (8), (10) are separately actuated without overlapping of the actuation timing to lift up all the file cases (2), (2') after the designated file case (2) is separated from the other file cases (2') thereby to reduce the load on the motor to about a half;

[c] The separation angle bar (9) is spaced from the rear edge projections of all the file cases (2), (2') and the rear lift bar (8) is positioned in a lowered state prior to actuation of the selector (and when the selector is not in use for a time) in order to reduce the revolutional angle of the driving shaft required for performing the operations defined in features [a] and [b] as well as the other requisite operations to a revolution angle of 360°, and there is additionally provided a single special bar (12) to provide stable support for the file cases in the rack by sharing the load of all the file cases in the rack in association with the front lift bar (10) and thereby avoid applying an excessive weight of the file cases (2), (2') to parts of the code bars (3), having insufficient strength to support the file cases at all times;

[d] the shapes and arrangements of various cams, gear wheels (13'), rollers (13'') etc., fitted to the driving shaft (13) are adapted for performing the operation of each part of the selector as well as the operations defined in features [a] to [c];

[e] the separation angle bar (9) is provided at its upper surface with a shoulder arranged to mesh with a recess formed at the lower portion of the rear lower edge projection of each of the undesignated file cases (2') to prevent the undesignated file cases (2') from being ejected, due to friction, with the designated file case (2) when it is pushed out whereby all the undesignated file cases (2') are left in the rack at predetermined positions after ejection of the designated file case.

2. An automatic selector according to Claim 1 wherein the spiral rotor (1) has a blade (1') twisted 90° along the shaft (1'') having a length of about 500 mm and a plurality of blades are provided on the shaft (1'') when the width of the rack is substantially longer than the 500 mm long shaft.

**Patentansprüche**

1. Automatische Selektioniereinrichtung für Akten mit einem Regal (4) für die wahllose Halterung einer Vielzahl von Akten, deren jede ein einer Codezahl entsprechende Anzahl von Vorsprüngen an ihrem unteren Bereich aufweist sowie einen hinteren unteren Kantenvorsprung, welcher mindestens eine Akte (2) von einer anderen Akte (2') getrennt hält, mit einer Steuereinrichtung (6) zur Übertragung elektrischer Signale, welche der Codezahl der betreffenden Akte (2) entsprechen, durch Betätigung einer Taste (6a) oder einer Befehlskarte (7), mit einem elektrischen System auf dem Regal, welches eine Reihe von Solenoiden sowie einen Motor umfaßt, welche durch die elektrischen Signale betätigt werden, mit einer Anzahl von Codestangen (3), welche parallel zueinander und unterhalb der Akten (2), (2') im Regal angeordnet sind, so daß sie den Vorsprüngen in den unteren Bereichen der Akten gegenüberliegen, eine Trennwinkelstange (9), welche in einer Ausnehmung zwischen den Vorsprüngen an den hinteren unteren Kanten der Akten (2), (2') eindringen kann, welche bei Betätigung des Gerätes dadurch entstehen, daß die gewünschte Akte (2) in Abwärtsrichtung von den ungewünschten Akten (2') separiert wurde und welche danach den Separationszustand aufrechterhält, wobei dei bezeichnete Akte (2) abwärts fällt, wenn die entsprechenden Codestangen (3), welche den Vorsprüngen im unteren Bereich der gewünschten Akte gegenüberliegen, gesenkt werden und zwar durch Betätigung des elektrischen Systems, wobei die nicht-bezeichneten Akten (2') nicht herabfallen, da einige der Vorsprünge in den unteren Bereichen der nicht-bezeichneten Akten durch die Codestangen (3) unterstützt werden, mit einer hinteren Hebestange (8) und einer vorderen Hebestange (10), welche zusammenwirken und die vorderen und hinteren Enden aller Akten (2), (2') im separierten Zustand hochheben, mit einer Abwurfwinkelstange (11), welche drehbar ist und die hintere untere Kante der bezeichneten Akte (2), welche unter den nichtbezeichneten Akten (2') liegt, schiebt and zwer in einem Zustand, in dem die Vorsprünge der unteren Bereiche aller Akten (2), (2'), welche durch die vorderen und hinteren Stangen (8), (10) angehoben sind, von den oberen Flächen aller Codestangen (3) getrennt sind, mit einem in vertikaler Richtung bewegbaren vorderen Unterstützungsglied (5), welches sich in der abgesenkten Position befindet, wenn die Winkelstange (11) gedreht wird, so daß die bezeichnete Akte (2) glatt geschoben wird derart, daß der vorder Kantenbereich auf die Oberfläche des vorderen Unterstützungsgliedes (5) gelangt, und mit einer Einzelantriebswelle (13), welche durch has elektrisch System betätigbar is und die anderen Teile dazu veranlaßt, in ihre Ursprungspositionen zurückzukehren und zwar im Verlauf einer 360° Umdrehung der Antriebswelle, während andererseits der vordere Kantenbereich der bezeichneten Akte auf dem vorderen Unterstützungsglied verbleibt, dadurch gekennzeichnet, daß

(a)  ein spriralförmiger Rotor (1) von der Antriebswelle (13) angetrieben wird, so daß die vorderen Kantenbereiche aller Akten (2), (2') im Regal (4) sequentiell durch die verdrillte Platte (1') des Rotors angehoben werden und herabfallen derart, daß die bezeichnete Akte (2) nach unten verlagert wird unter Überwindung der Reibungskraft zwischen benachbarten Akten (2') aufgrund der Trägheit, während die anderen Akten (2') auf den Codestangen (3) verbleiben, so daß die bezeichnete Akte (2) von den anderen Akten (2') getrennt wird;

(b)  daß die vorderen und hinteren Stangen (8), (10) getrennt betätigt werden, ohne daß sich die Betätigungszeiten überlappen, im Sinne einer Anhebung aller Akten (2), (2'), nachdem die bezeichnete Akte (2) von den anderen Akten (2') separiert wurde, derart, daß die Motorlast auf etwa die Hälfte gesenkt wird;

(c)  daB die Trennwinkelstange (9) in einem Abstand von in Vorsprüngen an den hinteren Kanten aller Akten (2), (2') angeordnet ist, während die hintere Hebestange (8) in einer abgesenkten Position angeordnet ist, bevor die Selektionseinrichtung betätigt wird (und während die Selektionseinrichtung eine Zeit lang nicht in Benutzung ist) zum Zwecke der Verringerung des Drehwinkels der Antriebswelle, welche erforderlich ist für die Durchführung der Verfahrensstufen (a) und (b) sowie anderer Arbeitsstufen auf einen Drehwinkel von 360° und daß zusätzlich eine Einzelstange (12) vorgesehen ist, welche den Akten im Regel zusätzliche Unterstützung verleiht durch teilweise Übernahme der Last aller Akten im Regal in Zusammenwirkung mit der vorderen Hebestange (10), so daß die Beaufschlagung von Teilen der Codestangen (3) mit unzureichender Festigkeit durch das übermäßige Gewicht der Akten (2), (2') vermieden wird wobei die Akten ständig von der Stange (12) unterstützt werden;

(d)  daß die Formen und Anordnungen verschiedener Nocken, Zahnräder (13'), Rollen (13'') usw., welche auf der Antriebswelle (13) angeordnet sind angepaßt sind an die Arbeitsweise aller Bauteile der Selektionseinrichtung sowie der Arbeitsstufen (a) bis (c);

(e)  daß die Trennwickelstange (9) an ihrer oberen Fläche eine Schulter aufweist, welche zusammenwirkt mit einer Ausnehmung im unteren Bereich des Vorsprungs an der hinteren unteren Kante einer jeden der unbezeichneten Akten (2'), so daß verhindert wird, daß die unbezeichneten ausgeworfen werden und zwar zusammen mit der bezeichneten Akte (2), wenn diese herausgeschoben wird, dergestalt, daß nach dem Herausschieben der bezeichneten Akte alle nicht-bezeichneten Akten (2') in vorbestimmten Positionen auf dem Regel verbleiben.

2.  Automatische Selektioniereinrichtung nach Anspruch 1, dadurch gekennzeichnet, daß der spiralförmige Rotor (1) eine Platte (1') aufweist, welch entlang der Welle (1'') mit einer Länge von etwa 500 mm um 90° verdrillt ist und daß ferner eine Vielzahl von Platten an der Welle (1'') angeordnet sind, wenn die Breite des Regals wesentlich länger ist als die Welle mit der Länge von 500 mm.

## Revendications

1. Sélecteur automatique de dossiers comprenant un classeur (4) destiné à contenir de manière aléatoire un grand nombre de dossiers dont chacun comprend un certain nombre de saillies correspondant à un numéro de code à sa portion inférieure et une saillie sur son bord inférieur arrière pour maintenir séparés au moins un dossier désigné (2) et les autres dossiers (2′), un contrôleur (6) destiné à transmettre des signaux électriques correspondant aux numéros de code d'un dossier désigné (2) par actionnement d'un bouton poussoir (6a) ou à l'aide d'une carte de lecture (7), un système électrique prévu an niveau du classeur, le système électrique comprenant une série de solénoïdes et un moteur qui sont actionnés par les signaux électriques, un certain nombre de barres de codage (3) disposées en parallèle et au-dessous des dossiers (2), (2′) maintenus dans le classeur de façon à se trouver en regard des saillies réalisées au niveau des portions inférieures des dossiers, une barre d'angle de séparation (9) apte à pénetrer dans un espace entre les saillies des bords inférieurs arrière des dossiers (2), (2′), espace réalisé en fonctionnement par le mouvement vers le bas du dossier désigné (2) pour le séparer des dossiers non désignés (2′) et qui maintient ensuite l'état séparé, le dossier désigné (2) étant agencé pour tomber sur des barres de codage respectives d'abaissement (3) en face des saillies prévues à la portion inférieure du dossier désigné par actionnement du système électrique tandis que les dossiers non désignés (2′) ne tombent pas parce que certaines des saillies réalisées au niveau des portions inférieures des dossiers non désignés sont supportées par les barres de codage (3), une barre de levage arrière (8) et une barre de levage avant (10) qui coopèrent pour soulever les extrémités avant et arrière de tous les dossiers (2), (2′) à l'état séparé, une barre d'angle d'expulsion (11) apte â tourner poug pousser le bord inférieur arrière du dossier désigné (2) positionné au-dessous des dossiers non désignés (2′) à l'état où les saillies au niveau des portions inférieures de tous les dossiers (2) (2′) soulevés par les barres arrière et avant (8), (10), sont séparées de la surface supérieure de toutes les barres de codage (3), un support avant mobile dans le sens vertical (5) agencé pour occuper sa position abaissée lorsque la barre d'angle (11) tourne afin que le dossier désigné (2) subisse une poussée uniforme pour que la portion de son borde avant soit placée sur la surface du support avant (5) et un seul arbre moteur (13) actionnable par le système électrique pour provoquer le retour des autres pièces à leurs positions initiales lors d'un rotation de 360° de l'arbre moteur tout en maintenant la portion du bord avant du dossier désigné sur le support avant, caractérisé en ce que:

a) un rotor hélicoïdal (1) entraîné par ledit arbre (13) est prévu pour que les portions des bords avant de tous les dossiers (2), (2′) maintenus dans le classeur (4) soient soulevées séquentiellement et lachées par la lame tordue (1′) du rotor pour que le dossier désigné (2) soit déplacé vers le bas, en surmontant le frottement avec les dossiers voisins (2′) en raison de l'inertie, tandis que les autres dossiers (2′) restent sur les barres de codage (3), séparant ainsi le dossier désigné (2) des autres dossiers (2′);

b) les barres de levage avant et arrière (8), (10) sont actionnées séparément sans chevauchement des instants d'actionnement pour soulever tous les dossiers (2), (2′) après que le dossier désigne (2) ait été séparé des autres dossiers (2′), réduisant ainsi de moitié la charge sur le moteur.

c) la barre d'angle de séparation (9) espacée des saillies des bords arrière de tous les dossiers (2), (2′) et la barre de levage arrière (8) est positionnée à l'état abaissé avant l'actionnement du sélecteur (et lorsque le sélecteur n'est pas en service depuis un certain temps) afin de réduire l'angle de rotation de l'arbre moteur nécessaire à l'exécution des opérations définies dans les caractéristiques a et b ainsi que les autres opérations nécessaires à un angle de rotation de 360°, et on prévoit en outre une seule barre spéciale (12) pour assurer un support stable des dossiers dans for le classeur en partageant la charge de tous les dossiers du classeur en association avec la barre de levage avant (10), évitant ainsi d'appliquer un poids excessif des dossiers (2), (2′) sur les parties des barres de codage (3) présentant une résistance insuffisante pour supporter les dossiers à tous moments;

d) les formes et les agencements des divers engrenages (13′), rouleaux (13″) et cames, etc., fixés sur l'abre moteur (13) sont adaptées pour réaliser le fonctionnement de chaque partie du sélecteur ainsi que les opérations définies dans les caractéristiques a à c;

e) la barre d'angle de séparation (9) comporte à sa surface supérieure un épaulement destiné à coopérer avec in évidement réalisé au niveau de la portion inférieure de la saillie du bord inférieur arrière de chacun des dossiers non désignés (2′) pour empêcher les dossiers non désignés (2′) d'ètre éjectés, en raison du frottement, avec le dossier désigné (2) lorsqu'il est expulsé, de sorte que tous les dossiers non désignés (2′) restent dans le classeur dans des positions prédéterminés après l'éjection du dossier désigné.

2. Sélecteur automatique selon la revendication 1, caractérisé en ce que le rotor hélicoïdal (1) comprend une lame (1′) présentant une torsion de 90° le long de l'arbre (1″) ayant une longueur d'environ 500 mm et une pluralité de lames sont prévues sur l'arbre (1″) lorsque la largeur du classeur est sensiblement supérieure à celle de l'arbre d'une longueur de 500 mm.

# FIG. 1

# FIG. 2

1

0 035 567

# F I G. 3

# F I G. 4

# F I G. 5

2

**0 035 567**

# FIG. 6

# FIG. 7

3